# DEMANDE DE BREVET EUROPEEN

(11) **EP 1 115 259 A1**
(43) Date de publication de la demande: **11.07.2001**
(21) Numéro de dépôt: 00403114.2
(22) Date de dépôt: 09.11.2000
(51) Int. Cl.: H04Q 7/24, H04Q 11/04, H04Q 3/62

(54) **Procédé de gestion de collision d'appels dans un canal de type canal D**

(30) Priorité: 06.01.2000 FR 0000120
(71) Demandeur: ALCATEL, 75008 Paris (FR)
(72) Inventeur: Villatte, Karine, 92250 La Garenne Colombes (FR); Phan, Cao Thanh, 92500 Rueil Malmaison (FR)
(74) Mandataire: Sciaux, Edmond

(57) **Abrégé**

L'invention concerne un procédé de gestion de collision d'appels. Dans le cas d'une collision de débit ou d'une collision de voie logique rencontrée lors d'une demande d'établissement de communication entre un premier terminal T1 et un deuxième terminal T2, le procédé selon l'invention désigne un terminal maître T1 et un terminal esclave T2. En fonction de la provenance de différents paquets d'appels, le procédé selon l'invention met alors en oeuvre des moyens pour assurer automatiquement la transmission des deux communications de préférence via le canal de signalisation, ou éventuellement via un canal de données.

## Description

L'invention concerne un procédé de gestion de collision d'appels. Plus particulièrement, l'invention concerne un procédé de gestion de collision d'appels au sein d'artères bi-directionnelles de communication entre des terminaux de type autocommutateurs privés, par exemple des PABX (Private Automatic Branch Exchange dans la littérature anglaise).

Le cadre général de l'invention est celui d'un réseau homogène de terminaux de type PABX reliés entre eux par des artères, le dit réseau étant raccordé à un réseau numérique à intégration de service (RNIS).

D'une manière générale, une artère entre deux terminaux définit un ensemble d'accès à ces terminaux. Ces accès sont des lignes de transmission louées ou achetées par les utilisateurs auprès d'un service public. Physiquement, les accès se décomposent en plusieurs canaux. Ainsi, par exemple, les artères de type T0, dites artères à débit de base, supportent deux canaux de transmission de données, dits canaux B, qui ont un débit de 64 kilobits par seconde, et un canal de signalisation, dit canal D, dont le débit est de 16 kilobits par seconde. Les artères de types T2, dites artères à débit primaire, supportent 30 canaux B et un canal D, l'ensemble de ces canaux ayant un débit de 64 bits par seconde.

Toutes ces artères sont dites polyvalentes dans le sens ou chacune d'entre elles est apte, dans la limite de son débit propre, à fournir l'ensemble des services offerts par le réseau. D'une façon générale, le canal B est un canal qui peut être utilisé pour transporter tout type d'informations, qu'elles soient de nature numérique ou analogique, et qu'il s'agisse de paquets de données ou des signaux propres au monde téléphonique. Le canal D est un canal apte à transporter en mode paquets la signalisation propre à différents services. Le canal D est essentiellement utilisé pour établir une communication sur un des canaux qui sont dans les différents accès. Il véhicule par exemple les informations, envoyées sous forme de paquet d'appels, par un terminal qui effectue une demande d'établissement de communication avec un autre terminal. Ces informations peuvent être un numéro de voie logique de l'artère requis pour la transmission des paquets de données qui vont suivre, un numéro de canal B pour la transmission des paquets de données qui vont suivre, l'adresse du destinataire, le type de paquet de données émis ...

Un protocole dit de niveau 2, ou encore LAPD (Link Access Protocole on the D channel dans la littérature anglaise) permet des échanges de trames sécurisées entre différents équipements tels que des terminaux, des adaptateurs de terminaux, des terminaisons numériques d'abonnés, des commutateurs ... Ces équipements assurent des fonctions qui sont conformes au principe de fonctionnement dit HDLC (High-level Data Link Control dans la littérature anglaise). Un champ d'adresse du LAPD est constitué de deux octets : le premier octet contient principalement un identificateur de point d'accès service, appelé SAPI (Service Access Point Identifier dans la littérature anglaise); le second octet contient un identificateur de terminal, appelé TEI (Terminal End-point Identifier dans la littérature anglaise). Ces deux éléments permettent de multiplexer plusieurs liens de protocole d'accès dans un même canal D. Le SAPI permet l'aiguillage de la trame vers une entité intéressée, par exemple un processeur de signalisation, un commutateur de paquets de données ou une entité de gestion. Le TEI permet d'adresser sur un bus passif un terminal particulier.

Les différents canaux de signalisation ou de données sont loués à un service public par l'utilisateur. Le canal de signalisation, ou canal D, est établi en permanence entre les deux terminaux qui se situent à ses extrémités. L'utilisateur paie donc en permanence l'utilisation de ce canal. Par contre, le coût des canaux de données, ou canaux B, est variable : il se compose d'un abonnement de montant fixe, et d'un montant qui dépend de la quantité de données échangées sur chacun de ces canaux B. L'utilisateur d'un réseau du type de celui dans lequel intervient le procédé selon l'invention limite donc, par soucis d'économie, le nombre de canaux B qu'il loue et l'utilisation qu'il en fait. Aussi, peut-il utiliser les canaux D pour transmettre certaines données dont le caractère n'est pas excessivement urgent. Ces données ne sont donc pas des données du monde téléphonique, mais plutôt des paquets de données qui circulent par exemple entre deux ordinateurs. L'utilisation du canal D ne dépendant pas du volume d'information échangé sur ce canal, l'utilisateur exploite ce dernier au maximum de ces possibilités.

Cependant, l'utilisateur est limité par certaines caractéristiques du canal D. En effet, un canal D est défini essentiellement par son débit et par le nombre de voies logiques dont il dispose.

Par définition, le débit d'un canal D correspond au nombre de bits que ce canal peut transmettre par unité de temps. Le nombre de voies logiques d'un canal D correspond au nombre de communications maximal qu'un tel canal peut simultanément établir par multiplexage. Le plus souvent, un canal D a un débit de 16 kilobits par seconde, et dispose de 8 voies logiques.

Une communication au travers d'une artère bidirectionnelle de communication s'effectue en deux étapes : tout d'abord, un terminal émet un paquet d'appel vers un autre terminal pour établir la communication et pour en préciser certaines caractéristiques. Si la demande d'établissement de communication est acceptée, il peut alors émettre des paquets de données.

Un utilisateur d'un des terminaux du réseau considéré peut rencontrer deux types de problème de collision lorsqu'il tente de transmettre des données par un canal D. Ces deux types de collision sont à présent expliqués.

Un canal D a un débit propre D0 qui correspond au débit maximal qui peut être utilisé sur ce canal. A chaque instant, un canal D est caractérisé par un débit disponible DN qui correspond à la différence entre le débit propre D0 et la somme des débits qui sont à cet instant utilisés par diverses transmissions de données. Lorsqu'un terminal effectue une demande d'établissement de communication, via un canal D, avec un autre terminal, il émet un ensemble de données sous forme d'un paquet d'appel dans le canal D. Ce paquet d'appel est notamment constitué d'un entête informant sur la nature du type de paquet de données, du numéro de voie logique sur laquelle le terminal émetteur souhaite émettre des paquets de données à suivre, l'adresse du terminal destinataire et du débit requis D1 dont il a besoin pour assurer la communication, pour effectuer un transfert de paquets de données.

Si le débit requis D1 est supérieur au débit disponible DN, la communication ne peut pas être établie via le canal D. Le paquet d'appel et les paquets de données seront alors transmis via un des canaux B après émission par l'utilisateur d'un nouveau paquet d'appel pour établir la communication. La demande d'établissement de communication via le canal D a été rejetée.

Si le débit requis D1 est inférieur au débit disponible DN et qu'aucune demande d'établissement d'appel n'est émise par le terminal destinataire, alors la communication est possible. Les paquets de données pourront être transmis via le canal D.

Si le débit requis D1 est inférieur au débit disponible DN, mais qu'une demande d'établissement de communication est émise sous forme d'un paquet d'appel à un instant voisin par le terminal destinataire, le paquet d'appel de ce dernier comprenant un en-tête stipulant qu'il requiert un débit D2, et si la somme des deux débits D1 + D2 est supérieure au débit disponible DN, alors nous sommes dans une situation de collision de débit. Par le terme instant voisin, il faut comprendre que la demande d'établissement de communication émise par le deuxième terminal est émise après que la premier terminal a lui-même émis sa demande d'établissement de communication, mais avant que le paquet d'appel du premier terminal soit arrivé au deuxième terminal. Dans le cas d'une collision de débit, les deux terminaux destinataires des paquets d'appel renvoient aux terminaux émetteurs de la demande d'établissement de communication un ensemble de données appelé paquet de libération, qui informe chaque terminal émetteur de la collision de débit. En conséquence, aucun établissement de communication n'est effectué. Les deux appels doivent être ultérieurement renouvelés.

Par ailleurs, dans le cas de figures où il ne reste qu'une unique voie logique de disponible dans un canal D, et que deux terminaux reliés par une artère contenant ce canal D émettent à des instants voisins des demandes d'établissement de communication au moyen de paquets d'appel similaires à ceux qui ont été décrits précédemment, les demandes d'établissement de communication sont rejetées. Nous sommes alors dans le cas d'une collision de voie logique.

Dans l'état de la technique, les collisions de voie logique et les collisions de débit entraînent une libération des deux demandes d'établissements de communication. Chaque terminal ayant reçu un paquet de libération devra ultérieurement effectuer une nouvelle tentative de demande d'établissement de communication. Ce fonctionnement est contraignant et entraîne le plus souvent des pertes de temps dans les échange de données entre terminaux.

Le procédé selon l'invention permet de pallier des différents défauts et inconvénients qui viennent d'être décrits. A cet effet, le procédé selon l'invention met en oeuvre des moyens pour ne libérer définitivement aucune des demandes d'établissement de communication effectuées même dans des situations de collision de débit ou de voie logique. A cet effet, un des deux terminaux est désigné comme terminal maître, l'autre terminal étant alors désigné comme terminal esclave.

Dans le cas d'une collision de débit, le terminal maître ayant reçu un paquet de libération ré-émet instantanément sa demande d'établissement de communication sur le canal D. Pour sa part, la terminal esclave ayant reçu un paquet de libération marque une temporisation avant d'émettre automatiquement de nouveau sa demande d'établissement de communication, et si le débit disponible est toujours insuffisant pour réaliser le transfert de données requis, les paquets de données seront alors transmis sur un autre canal de type B.

L'invention concerne donc un procédé de gestion, au sein d'une artère bi-directionnelle assurant une communication entre un premier terminal de type autocommutateur privé et un deuxième terminal du même type, des collisions entre un premier paquet d'appel de requête d'établissement de communication émis par le premier terminal vers le deuxième terminal et un deuxième paquet d'appel de requête d'établissement de communication émis par le deuxième terminal vers le premier terminal, les deux paquets d'appel étant émis à des instants voisins par chacun des deux terminaux sur un canal de signalisation de la dite artère, le canal de signalisation étant défini notamment par un débit et un nombre de voies logiques qui lui sont propres,
caractérisé en ce qu'il comporte l'étape consistant à attribuer un mode maître à un des deux terminaux, qui est alors dit terminal maître, et un mode esclave à l'autre terminal, qui est alors dit terminal esclave, dans le but de déterminer les différentes étapes d'établissement de communication pour procéder à une transmission de paquets de données associés au premier paquet d'appel et au deuxième paquet d'appel.

Selon un mode de mise en oeuvre préféré de l'invention, dans le cas d'une collision dite de débit, les différentes étapes d'établissement de la communication consistent à :
- détecter des paquets d'appel dit de dépassement de débit, dont le débit requis est trop important, en comparant le débit requis par chaque paquet d'appel à un débit disponible au niveau du terminal récepteur du paquet d'appel ;
- renvoyer un message de collision vers chaque terminal ayant émis un paquet d'appel de dépassement de débit ;
- le cas échéant, propager directement un paquet d'appel qui n'a pas été détecté comme étant un paquet d'appel de dépassement de débit ;
- émettre de nouveau le ou les paquets d'appel de dépassement de débit, instantanément s'il s'agit d'un paquet d'appel émis par le terminal maître, après une temporisation s'il s'agit d'un paquet d'appel émis par le terminal esclave.

Les paquets d'appel qui sont émis après une temporisation sont émis sur un canal autre que le canal de signalisation. Ils peuvent être suivis de paquets de données qui sont orientés vers le même canal que les paquets d'appel. Par ailleurs, la temporisation peut avoir une durée qui dépend de la taille des paquets de données à émettre à la suite du paquet d'appel de requête d'établissement de communication émis par le terminal maître.

Selon un autre mode de mise en oeuvre du procédé selon l'invention, la temporisation a une durée fixe de deux secondes.

Par ailleurs, dans le cas d'une collision dite de voie logique, les différentes étapes d'établissement de communication consistent à
- propager directement le paquet d'appel issu du terminal maître ;
- émettre de nouveau le paquet d'appel issu du terminal esclave sur un canal autre que le canal de signalisation, une transmission de paquets de données associés au paquet d'appel étant alors effectuée sur le même canal que les paquets d'appel.

Le mode maître ou le mode esclave peuvent être attribués à chaque terminal en fonction d'un numéro propre à ce terminal. En effet, au sein d'un réseau homogène, chaque terminal constituant un noeud de ce réseau est numéroté. Ce numéro peut par exemple correspondre à l'ordre chronologique de la mise en service du terminal considéré dans le réseau. Selon un autre mode de mise en oeuvre du procédé selon l'invention, le mode maître ou le mode esclave sont attribués à chaque terminal en fonction du nombre de terminaux qui lui sont adjacents. Deux terminaux sont dits adjacents lorsqu'il existe entre ces deux terminaux une artère de communication qui les relie directement. Dans les réseaux homogènes auxquels s'applique la mise en oeuvre du procédé selon l'invention, chaque terminal contient des données indiquant le nombre de terminaux qui lui sont adjacents.

Les différents aspects avantages de la présente invention seront mieux compris à la lecture de la suite de la description en référence aux figures qui ne sont donnés qu'à titre indicatif et nullement limitatif et qui sont à présent introduites :
- la figure 1 illustre la mise en oeuvre du procédé selon l'invention dans le cas d'une collision de débit détectée par deux terminaux reliés par une artère ;
- la figure 2 illustre la mise en oeuvre du procédé selon l'invention dans le cas d'une collision de débit détectée uniquement par un terminal maître ;
- la figure 3 illustre la mise en oeuvre du procédé selon l'invention dans le cas d'une collision de débit détectée uniquement par un terminal esclave ;
- la figure 4 illustre la mise en oeuvre du procédé selon l'invention dans le cas d'une collision de voie logique.

Dans l'ensemble des figures qui vont à présent être décrites, un premier terminal T1 et un second terminal T2 sont reliés par une artère 1, cette artère contenant un canal D de signalisation et une pluralité de canaux B de transmission de données. Le terminal T1 est désigné comme étant le terminal maître et le terminal T2 est désigné comme étant le terminal esclave. Comme il l'a été précédemment expliqué, le mode maître et le mode esclave peuvent être attribués notamment en fonction d'un numéro propre au terminal, ce numéro pouvant par exemple correspondre à un numéro de mise en service du terminal considéré dans le réseau homogène. La désignation maître/esclave peut être également déterminée par le nombre de terminaux qui sont adjacents à chacun des terminaux considérés. Dans ce cas de figure, le terminal maître peut être désigné comme étant celui qui a le plus de terminaux adjacents. On peut bien évidemment envisager tout autre mode de détermination pour désigner un terminal maître et un terminal esclave entre deux terminaux sont reliés par une artère.

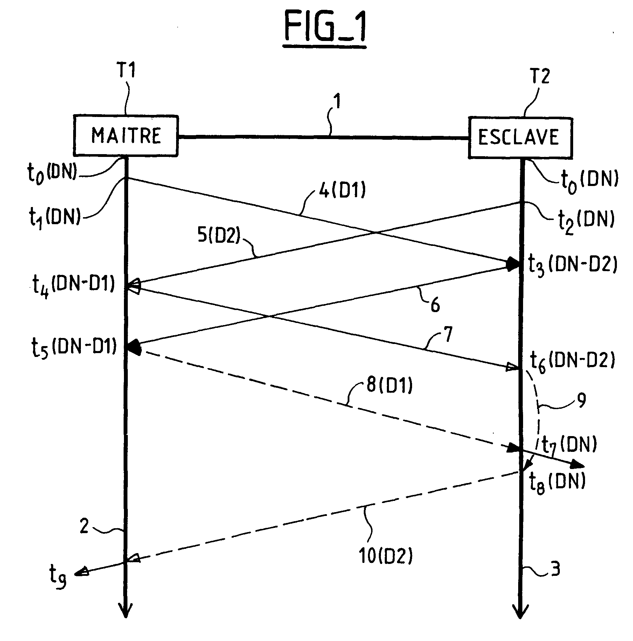

Sur l'ensemble des figures 1 à 4, un axe vertical 2 relié au terminal maitre T1 symbolise un axe des temps qui permet de repérer dans le temps différents évènements impliquant le terminal T1. De la même manière, un axe vertical 3 relié au terminal esclave T2, symbolisant un axe des temps, permet de repérer dans le temps différents évènements impliquant le terminal T2.

Ces différents évènements peuvent être :
- la première émission d'un paquet d'appel sur le canal D, le terme paquet d'appel correspondant toujours à une tentative d'établissement de communication en vue de transmettre ultérieurement des paquets de données ;
- une émission ou une réception d'un paquet de libération signifiant que le paquet d'appel précédemment émis n'a pas abouti à l'établissement d'une communication ;
- une propagation d'appel qui signifie que l'établissement de la communication a fonctionné et que les paquets de données peuvent être transmis ;
- une ré-émission d'un paquet d'appel.

Les notations du type tₖ (X) qui apparaissent le long des axes de temps 2 et 3 signifient qu'à l'instant k, le débit disponible apparent, donné par le terminal correspondant à l'un des axes des temps, a pour valeur X.

Le débit disponible apparent d'une artère est une valeur disponible dans chaque terminal connecté à l'artère. Cette valeur correspond au débit que le terminal en question pense être disponible à chaque instant sur l'artère. Cette valeur ne correspond pas au débit réellement disponible, car elle ne tient pas compte de la valeur des débits requis par les paquets d'appel issus de l'autre terminal connecté à l'artère et qui ne sont pas encore parvenus au terminal considéré.

Les différentes flèches entre les deux axes temporels symbolisent différentes étapes dans l'établissement de la communication entre les deux terminaux. Les flèches pointillés désignent les étapes caractéristiques du procédé selon l'invention. Sur les différents dessins, les flèches dont la pointe est noircie correspondent aux différentes opérations intervenant suite à l'émission d'un paquet d'appel par le terminal maître. Les flèches dont la pointe en traits continus est noircie correspond aux différentes opérations intervenant suite à un paquet d'appel émis par le terminal esclave. Les flèches dont l'extrémité est en traits pointillés correspondent à différentes opérations relatives à une communication qui était déjà établie au moment des différentes collisions qui sont étudiées.

A la figure 1, le terminal maître T1 et le terminal esclave T2 émettent à des instants voisins t1 et t2 respectivement un paquet d'appel 4 dit appel maître requérant un débit D1 et un paquet d'appel 5 dit appel esclave requérant un débit D2.

La figure 1 illustre le cas de figure où à un instant t0 précédant les instants t1 et t2 le débit disponible sur le canal D a une valeur DN supérieure à D1 et D2, mais inférieure à la somme D1+D2.

Nous sommes donc typiquement dans le cas d'une collision de débit. L'appel maître et l'appel esclave sont émis à des instants voisins, c'est à dire que chacun des deux paquets d'appel est émis avant qu'un des deux paquets d'appel soit arrivé à destination.

L'appel maître 4 arrive au terminal T2 à un instant t3. A cet instant t3, le débit disponible apparent dans le canal D a une valeur égale à DN-D2 qui est inférieure à D1. L'appel maître 4 est alors détecté comme un appel de dépassement de débit.

Un premier message de collision est alors transmis sous la forme d'un premier paquet de libération 6 de l'appel maître 4 du terminal T2 vers le terminal T1 ; ce premier paquet de libération informe le terminal T1 que la demande d'établissement de communication n'a pas pu être effectuée. De la même façon, l'appel esclave 5 arrive au terminal T1 à un instant t4. A cet instant, le terminal T1 indique que le débit disponible apparent a une valeur égale à DN-D1, qui est inférieure au débit D2 requis par l'appel esclave. Un deuxième paquet de libération 7 est donc transmis du terminal T1 vers le terminal T2. Il informe le terminal T2 que l'appel esclave 5 n'a pu aboutir à un établissement de communication.

Le premier paquet de libération 6 arrive au terminal T1 à un instant t5 ; à cet instant le débit disponible apparent donné par le terminal T1 est toujours égal à DN-D1. Selon le procédé de l'invention, l'appel maître est immédiatement ré-émis sous la forme d'un deuxième appel maître 8 identique au premier appel maître 4.

Le paquet de libération 7 arrive au terminal T2 à un instant t6 ; à cet instant le débit apparent disponible pour le terminal T2 est toujours égal à DN-D2. Selon le procédé de l'invention, l'appel esclave 4 n'est, pour sa part, pas immédiatement ré-émis. Une temporisation 9 est déclenchée. Cette temporisation 9 permet au deuxième appel maître 8 d'arriver au terminal T2 à un instant t7 où le débit apparent disponible est égal à DN. La demande d'établissement de communication de l'appel maître 7 est alors prise en compte, le débit requis D1 étant inférieur au débit disponible apparent DN. Des paquets de données consécutifs au paquet d'appel pourront alors être transmis par le canal D. L'appel maître est ainsi directement propagé.

La temporisation arrive à son terme à un instant t8 où le débit apparent disponible est égal à DN. Un deuxième appel esclave 10 semblable au premier appel esclave 5 est alors de nouveau émis. Si nécessaire, le deuxième appel esclave 10 peut effectuer une demande d'établissement de communication sur un canal B. En fonction du débit disponible apparent du terminal T1, la transmission des paquets de données de l'appel esclave peuvent alors être effectuées sur le canal D ou sur un canal B.

Comme il l'a déjà été mentionné précédemment, la temporisation peut avoir une durée fixe prédéterminée par exemple de l'ordre de 2 secondes, ou encore dépendre de la taille et du débit des paquets d'appel consécutif à l'appel maître qui est propagé. Dans tous les cas de figure, cette temporisation doit cependant être suffisante pour permettre au deuxième appel maître 8 d'arriver au terminal esclave T2 avant la fin de la temporisation 9.

Le deuxième appel esclave 10 arrive au terminal T1 à un instant t9.

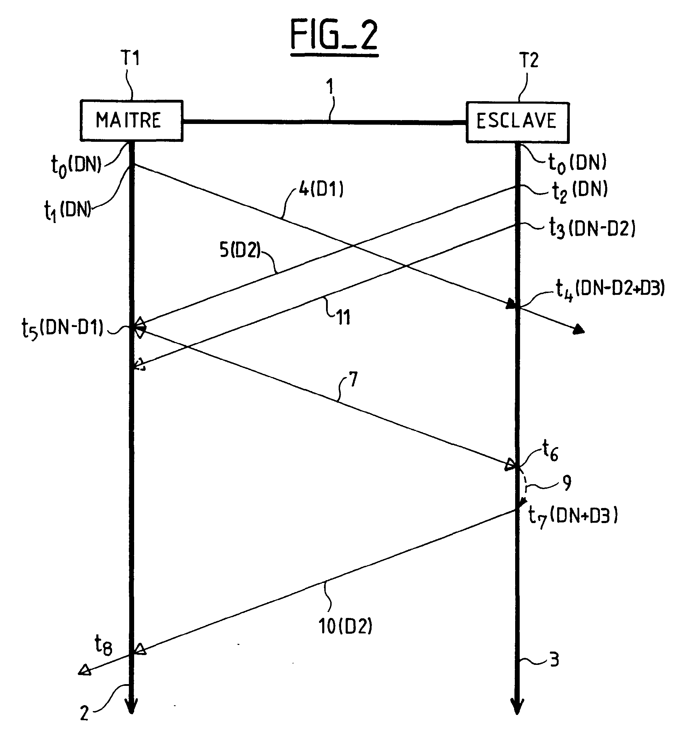

La figure 2 illustre elle aussi un cas de collision de débit. Ce cas est un cas particulier de la situation présentée à la figure 1.

Le terminal maître T1 et le terminal esclave T2 émettent toujours à des instants voisins t1 et t2 respectivement le paquet d'appel 4 dit appel maître requérant le débit D1 et le paquet d'appel 5 dit appel esclave requérant le débit D2. A l'instant t0 précédant les instants t1 et t2, le débit disponible sur le canal D a une valeur DN supérieure à D1 et à D2 mais inférieure à la somme D1+D2.

A un instant t3, le terminal esclave T2 émet un message 11 signifiant qu'une communication précédemment établie est arrivée à son terme. La communication précédemment établie requérait un débit D3. Le débit D3 est donc libéré et peut par conséquent être utilisé pour les communications attachées aux paquets d'appels 4 et 5.

Le paquet d'appel 4 arrive eu terminal T2 à un instant t4 ultérieur à l'instant t3 où le débit D3 s'est libéré. A cet instant t4, le débit disponible apparent dans le canal D a alors une valeur égale à DN-D2+D3 ; si cette valeur est supérieure au débit requis par le paquet d'appel 4, à savoir D1, ce qui est le cas représenté à la figure 2, alors la communication faisant suite au paquet d'appel 4 peut être établie directement. Les différents paquets de données succédant au paquet d'appel 4 peuvent transiter sur l'artère 1.

Par contre, l'appel esclave 5 qui arrive au terminal T1 à un instant t5 donne suite à un paquet de libération 7 qui est transmis du terminal t1 vers le terminal t2. En effet, à l'instant t5, le débit disponible apparent donné par le terminal T1 est toujours égal à DN-D1. Le paquet de libération 7 informe le terminal t2 que l'appel esclave 5 n'a pas pu aboutir à un établissement de communication.

Le deuxième paquet de libération 7 arrive au terminal T2 à un instant t6 ; à cet instant, le débit apparent disponible pour le terminal T2 a pour valeur DN-D2+D3 en supposant que la communication faisant suite à l'appel maître 4 n'est pas achevée. Selon le procédé de l'invention, l'appel esclave 5 n'est pas immédiatement ré-émis. La temporisation 9 est déclenchée. Elle arrive à son terme à un instant t7 où le débit apparent disponible est égal à DN+D3. Le deuxième appel d'esclave 10 semblable au premier rappel d'esclave 5 est alors de nouveau émis. Si nécessaire, le deuxième appel esclave 10 peut effectuer une demande d'établissement de communication sur un canal B.

La situation présentée à la figure 2 illustre le fait que, dans le cas où un certain débit se libère entre le moment où un paquet d'appel maître est émis par le terminal T1 et le moment où ce paquet d'appel maître arrive au terminal T2, la communication peut être directement établie pour transmettre les paquets de données liées à l'appel maître. Aucun paquet de libération n'est renvoyé depuis le terminal T2 vers le terminal T1. Par contre, selon le procédé de l'invention, un paquet de libération informant qu'un paquet d'appel esclave n'a pas pu établir directement une communication a pour conséquence le déclenchement automatique de la temporisation 9.

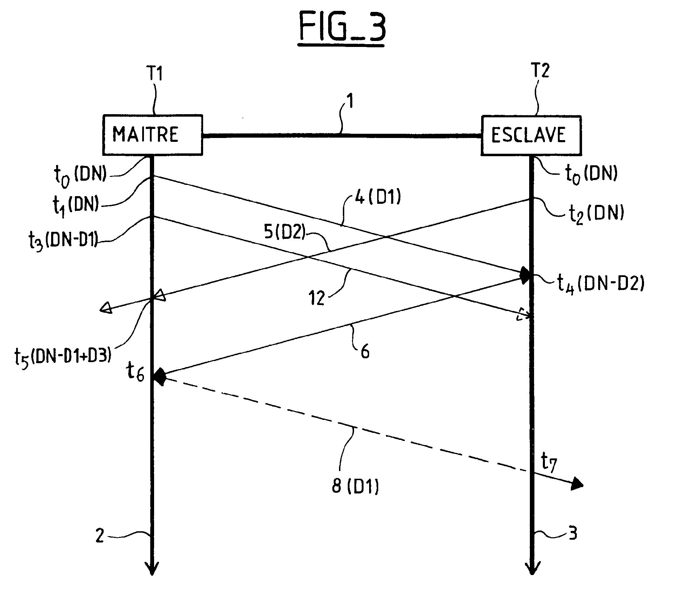

La figure 3 expose une situation semblable à celle rencontrée dans le figure 2 à la différence près qu'une collision de débit est traitée dans le cas où une transmission de données depuis le terminal T1 vers le terminal T2, initiée avant tout événement de collision, s'achève à un instant particulier. Nous sommes toujours dans le cas où le terminal maître T1 et le terminal esclave T2 émettent à des instants voisins t1 et t2 respectivement le paquet d'appel 4 dit appel maître requérant le débit D1, et le paquet d'appel 5 dit appel esclave requérant le débit D2.

A l'instant t0 précédant les instants t1 et t2, le débit disponible sur le canal D à une valeur DN supérieure à D1 et D2, mais inférieure à la somme D1+D2. Nous sommes donc toujours dans la cas d'une collision de débit.

A un instant t3, un signal 12 issu du terminal maître T1 destiné au terminal esclave T2 est émis afin de signaler qu'une communication précédemment établie depuis le terminal maître T1 vers le terminal esclave T2 est achevée. Cette communication requérait un débit D3. En conséquence, le paquet d'appel esclave 5 qui arrive au terminal maître T1 à un instant t5 trouve un débit disponible apparent de valeur DN-D1+D3, ceci bien évidemment dans le cas où t5 est ultérieur à t3. Dans ce cas, et si le débit D2 est inférieur à la valeur DN-D1+D3, la transmission de paquet de données depuis le terminal T2 vers le terminal T1 peut directement être effectuée via le canal D. Aucun paquet de libération n'est émis suite à l'émission du paquet d'appel 5.

Par contre, à un instant t4 correspondant à l'instant où le paquet d'appel 4 arrive au terminal esclave T2, le débit disponible apparent a pour valeur DN-D2. En conséquence, un paquet de libération 6 est émis depuis le terminal esclave vers le terminal maître T1. Il informe le terminal T1 que l'appel maître 4 n'a pu aboutir à un établissement de communication. Le paquet de libération arrive au terminal T1 à un instant t6. Selon le procédé de l'invention, il est instantanément ré-émis sous la forme d'un deuxième paquet d'appel maître 8 semblable au premier paquet d'appel maître 4. Le deuxième paquet d'appel maître 8 arrive au terminal T2 à un instant t7. A cet instant, en fonction du débit disponible, il est décidé si la transmission des paquets de données qui font suite au paquet d'appel 8 sera effectué sur le canal D ou sur un canal B.

On peut remarquer dans le cas de figure décrit à la figure 3 que le procédé selon l'invention permet la transmission automatique de deux appels sans aucune temporisation.

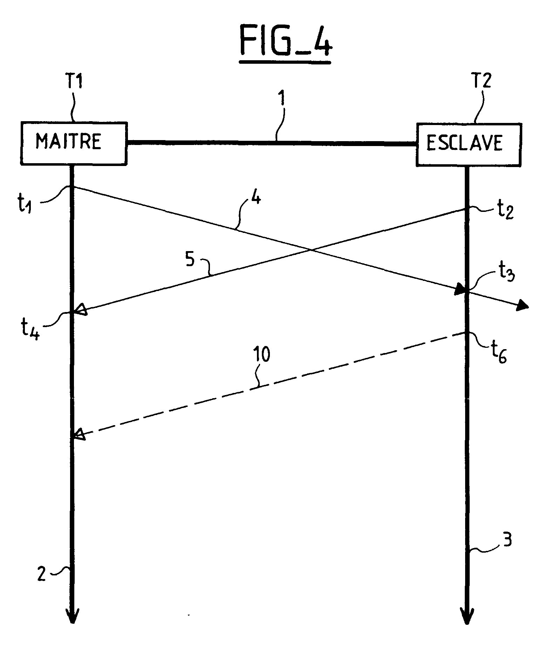

A la figure 4, la mise en oeuvre du procédé selon l'invention est illustrée dans le cas d'une collision dite de voie logique. Dans cet exemple, le débit de l'artère 1 est supposé suffisant pour transmettre simultanément les communications qui doivent être établies suite au premier paquet d'appel 4 et au deuxième paquet d'appel 5. Par contre, dans le cas de figures illustré, on suppose qu'il ne reste plus qu'une unique voie logique de l'artère D disponible pour l'échange de données entre le terminal T1 et le terminal T2. Les deux paquets d'appel 4 et 5 sont toujours émis à des instants voisins t1 et t2. Selon le procédé de l'invention, le paquet d'appel maître 4 arrive à un instant t3 au terminal esclave T2. Il est alors immédiatement propagé, et les paquets de données qui lui font suite pourront être transmis sur le canal D. Par contre, le paquet d'appel esclave arrive à un instant t4 au terminal maître T1. La demande d'établissement de communication est alors refusée. Un deuxième paquet d'appel 10 esclave similaire au premier paquet d'appel 5 esclave est alors de nouveau émis depuis le terminal T2 vers le terminal T1 à un instant t6. Le deuxième paquet d'appel esclave 10 est différent du premier paquet d'appel 5 esclave par le fait qu'il demande l'établissement d'une communication et un transfert de paquet de données sur un canal B.

D'une façon générale, dans le cas d'une collision de voie logique, lorsque deux paquets d'appel sont émis à des instants voisins par le terminal T1 et par le terminal T2, le paquet d'appel issu du terminal maître T1 est assuré d'établir immédiatement une communication et de pouvoir ainsi transférer des paquets de données qui succèdent au paquet d'appel 4. Le terminal esclave T2, ayant reçu le paquet d'appel maître 4 qui demande l'établissement d'une communication sur une voie logique qu'il avait lui-même requis dans le paquet d'appel esclave 5, sait de ce faite que la communication suite au paquet d'appel esclave 5 n'a pas pu être établie.

Le terminal esclave T2 ré-émet donc quasiment instantanément un nouveau paquet d'appel 10 demandant l'établissement d'une communication via un canal B.

## Revendications

1. Procédé de gestion, au sein d'une artère bi-directionnelle (1) assurant une communication entre un premier terminal (T1) de type autocommutateur privé et un deuxième terminal (T2) du même type, des collisions entre un premier paquet d'appel (4) de requête d'établissement de communication émis par le premier terminal (T1) vers le deuxième terminal (T2) et un deuxième paquet d'appel (5) de requête d'établissement de communication émis par le deuxième terminal (T2) vers le premier terminal (T1), les deux paquets d'appels (4;5) étant émis à des instants voisins (t1;t2) par chacun des deux terminaux (T1;T2) sur un canal de signalisation de la dite artère (1), le canal de signalisation étant défini notamment par un débit et un nombre de voies logiques qui lui sont propres,
caractérisé en ce qu'il comporte l'étape consistant à attribuer un mode maître à un des deux terminaux, qui est alors dit terminal maître (T1), et un mode esclave à l'autre terminal, qui est alors dit terminal esclave (T2), dans le but de déterminer les différentes étapes d'établissement de communication pour procéder à une transmission de paquets de données associés au premier paquet d'appel et au deuxième paquet d'appels (4;5).

2. Procédé de gestion de collision d'appels selon la revendication 1
caractérisé en ce que dans le cas d'une collision dite de débit, les différentes étapes d'établissement de communication consistent à :
- détecter des paquets d'appels dit de dépassement de débit, dont le débit requis est trop important, en comparant le débit requis par chaque paquet d'appel à un débit disponible au niveau du terminal récepteur de l'appel ;
- renvoyer un message de collision (6;7) vers chaque terminal ayant émis un paquet d'appel de dépassement de débit ;
- le cas échéant, propager directement un paquet d'appel qui n'a pas été détecté comme étant un paquet d'appel de dépassement de débit ;
- émettre de nouveau le ou les paquets d'appels de dépassement de débit, instantanément s'il s'agit d'un paquet d'appel émis par le terminal maître (T1), après une temporisation (9) s'il s'agit d'un paquet d'appel émis par le terminal esclave (T2).

3. Procédé de gestion de collision d'appels selon la revendication 2
caractérisé en ce qu'il comporte l'étape supplémentaire consistant à orienter les paquets d'appel émis après une temporisation, et des paquets de données associés aux paquets d'appel émis après une temporisation vers un canal autre que le canal de signalisation.

4. Procédé de gestion de collision d'appels selon l'une des revendications 2 ou 3 caractérisé en ce que la temporisation a une durée qui dépend de la taille des paquets de données à émettre à la suite du paquet d'appel de la requête d'établissement de communication émis par le terminal maître (T1).

5. Procédé de gestion de collision d'appels selon l'une des revendications 2 ou 3 caractérisé en ce que la temporisation a une durée de deux secondes.

6. Procédé de gestion de collision d'appels selon la revendication 1
caractérisé en ce que dans le cas d'une collision dite de voie logique, les différentes étapes d'établissement de communication consistent à :
- propager directement un paquet d'appel (4) issu du terminal maître (T1);
- émettre de nouveau un paquet d'appel (5) issu du terminal esclave (T2) sur un canal autre que le canal de signalisation, la nouvelle émission étant effectuée sur un canal autre que le canal de signalisation.

7. Procédé de gestion de collision d'appels selon l'une des revendications précédentes caractérisé en ce que le mode maître ou le mode esclave est attribué à chaque terminal en fonction d'un numéro propre au terminal.

8. Procédé de gestion de collision d'appels selon l'une des revendications 1 à 6 caractérisé en ce que le mode maître ou le mode esclave est attribué à chaque terminal en fonction du nombre de terminaux qui lui sont adjacents.
